# EUROPEAN PATENT APPLICATION

(11) **EP 4 800 686 A1**
(43) Date of publication of application: **02.09.2026**
(21) Application number: 24882317.1
(22) Date of filing: 18.10.2024
(51) Int. Cl.: G10L 15/22, G10L 13/00, G10L 13/08, B60R 16/037

(54) **DIALOG SYSTEM FOR VEHICLE**

(30) Priority: 23.10.2023 JP 2023181851
(71) Applicant: Yazaki Corporation, Minato-ku Tokyo, 108-0075 (JP)
(72) Inventor: WATANABE Fumiya, Susono-shi, Shizuoka 410-1194 (JP)
(74) Representative: Grünecker Patent- und Rechtsanwälte PartG mbB
(86) International application number: PCT/JP2024/037258
(87) International publication number: WO 2025/089204

(57) **Abstract**

A dialog system (1) for a vehicle uses interactive AI (10). The microphone (2) inputs the voice spoken by a driver. A voice recognition unit (41) converts the voice input by the microphone (2) into text data. A voice interaction unit (42) inputs, to the interactive AI (10), as input information (S1), text data converted by the voice recognition unit (41) and text data indicating a state of a driver or a vehicle driven by the driver when the driver speaks, or a command corresponding to the state. A voice synthesis unit (43) converts response information (S2) from the conversational AI (10) into voice. A speaker (5) outputs the voice converted by the voice synthesis unit (43).

## Description

### TECHNICAL FIELD

The present invention relates to a dialog system for vehicle.

### BACKGROUND ART

A voice agent service that responds by voice when a user utters has been proposed (Patent Literature 1). The voice agent service of Patent Literature 1 proposes returning predetermined chat data when an utterance content of the user is not a search. However, in the voice agent service of Patent Literature 1, the chat data is extracted from predetermined data, and thus no natural response such as a response in conversation with a human would be returned.

In recent years, a conversational AI that can learn from vast amounts of information available on the Internet and enable more natural conversations, such as ChatGPT, has been proposed. However, such a conversational AI does not return an appropriate answer unless an appropriate prompt (text data) is input. For this reason, when the conversational AI is used in a vehicle, no appropriate response may be obtained unless a driver utters a state of the driver, a state of the vehicle, and the like one by one.

### CITATION LIST

### PATENT LITERATURE

Patent Literature 1: JP2014-098844A

### SUMMARY OF INVENTION

### TECHNICAL PROBLEM

The present invention is made in view of the above circumstances, and an object of the present invention is to provide a dialog system for vehicle that appropriately responds to a voice of a driver.

### SOLUTION TO PROBLEM

To achieve the above object, the dialog system for vehicle according to the present invention has following features.

There is provided a dialog system for vehicle using a conversational AI that outputs response information including text data when receiving input information including text data. The dialog system for vehicle includes: a voice input unit configured to input a voice uttered by a driver; a voice recognition unit configured to convert the voice input by the voice input unit into text data; an input control unit configured to input, as the input information, the text data converted by the voice recognition unit and text data indicating a state of the driver or a vehicle driven by the driver when the driver utters or a command in accordance with the state to the conversational AI; a voice synthesis unit configured to convert the response information from the conversational AI into a voice; and a voice output unit configured to output the voice converted by the voice synthesis unit.

### ADVANTAGEOUS EFFECTS OF INVENTION

According to the present invention, it is possible to provide a dialog system for vehicle that appropriately responds to a voice of a driver.

The present invention is briefly described above. Details of the present invention can be clarified by reading modes (hereinafter, referred to as "embodiments") for carrying out the invention to be described below with reference to the attached drawings.

### BRIEF DESCRIPTION OF DRAWINGS

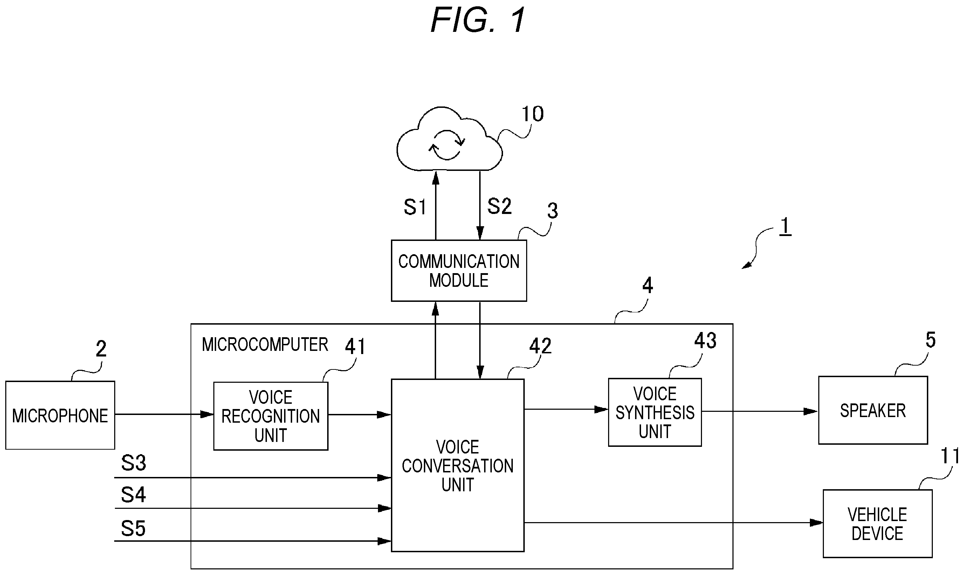

FIG. 1 is a block diagram showing a dialog system for vehicle according to an embodiment of the present invention;
FIG. 2 is a flowchart showing a processing procedure of a microcomputer shown in FIG. 1;
FIG. 3 is a schematic diagram showing an example of text data transmitted from the dialog system for vehicle to a conversational AI when an ignition is on;
FIG. 4 is a schematic diagram showing an example of a conversation between the dialog system for vehicle and a driver;
FIG. 5 is a schematic diagram showing an example of a conversation between the dialog system for vehicle and the driver; and
FIG. 6 is a schematic diagram showing an example of a conversation between the dialog system for vehicle and the driver.

### DESCRIPTION OF EMBODIMENTS

A specific embodiment according to the present invention will be described below with reference to the drawings.

A dialog system for vehicle 1 according to the present embodiment is a system that is mounted on a vehicle and communicates with a driver utilizing a conversational artificial intelligence (AI) 10. The conversational AI 10 is implemented by, for example, ChatGPT, and outputs response information S2 including text data when receiving input information S1 including text data.

The dialog system for vehicle 1 includes a microphone 2 that is a voice input unit, a communication module 3, a microcomputer 4, and a speaker 5 that is a voice output unit. The microphone 2 inputs a voice uttered by the driver to the microcomputer 4. The communication module 3 is for communicating with the conversational AI 10 via an Internet communication network (not shown), and includes a circuit, an antenna, and the like for connecting to the Internet communication network.

The microcomputer 4 includes a memory such as a random access memory (RAM) and a read only memory (ROM), and a central processing unit (CPU) that operates in accordance with a program stored in the memory, and controls the entire dialog system for vehicle 1.

The microcomputer 4 includes a voice recognition unit 41, a voice conversation unit 42 that is an input control unit, first determination unit, device control unit, and second determination unit, and a voice synthesis unit 43. The voice recognition unit 41 converts the voice input by the microphone 2 into text data and inputs the text data to the voice conversation unit 42. The voice conversation unit 42 adds text data indicating a state of the driver or the vehicle driven by the driver when the driver utters or a command in accordance with the state to the text data converted by the voice recognition unit 41, and inputs the text data to the conversational AI 10 as the input information S1.

Further, sensor information S3 from a plurality of sensors mounted on the vehicle is input to the voice conversation unit 42. Examples of the sensors include an illuminance sensor that measures illuminance outside the vehicle, a temperature sensor that measures an outside air temperature, a global positioning system (GPS) that detects a vehicle position, a seat sensor that detects whether a person is sitting on a seat, and a speed sensor that detects a speed of the vehicle. The sensor information S3 received from the sensors may be not only measurement values measured by the sensors but also moving averages and weighted averages of measurement values, and values calculated using measurement values and moving averages and weighted averages of measurement values.

Further, human information S4, which is a detection result from a driver monitor that detects a state of the driver (whether the driver is dozing, driving carelessly, and driving inattentively) based on an image obtained by imaging a face of the driver, is input to the voice conversation unit 42. In addition, warning information S5, which is a detection result from an abnormality detection unit that detects an abnormality (engine abnormality, hydraulic pressure abnormality, water temperature abnormality, charging abnormality, and the like) of the vehicle and turns on a warning lamp, is input to the voice conversation unit 42.

The voice conversation unit 42 is connected to a vehicle device 11 mounted on the vehicle, and can control the vehicle device 11. Examples of the vehicle device 11 include an air conditioner mounted on the vehicle, a display such as a head-up display, and an audio device.

The voice conversation unit 42 receives the response information S2 from the conversational AI 10 and outputs the received response information S2 to the voice synthesis unit 43. The voice synthesis unit 43 converts the response information S2 into a voice and outputs the voice to the speaker 5. The speaker 5 outputs the voice converted by the voice synthesis unit 43.

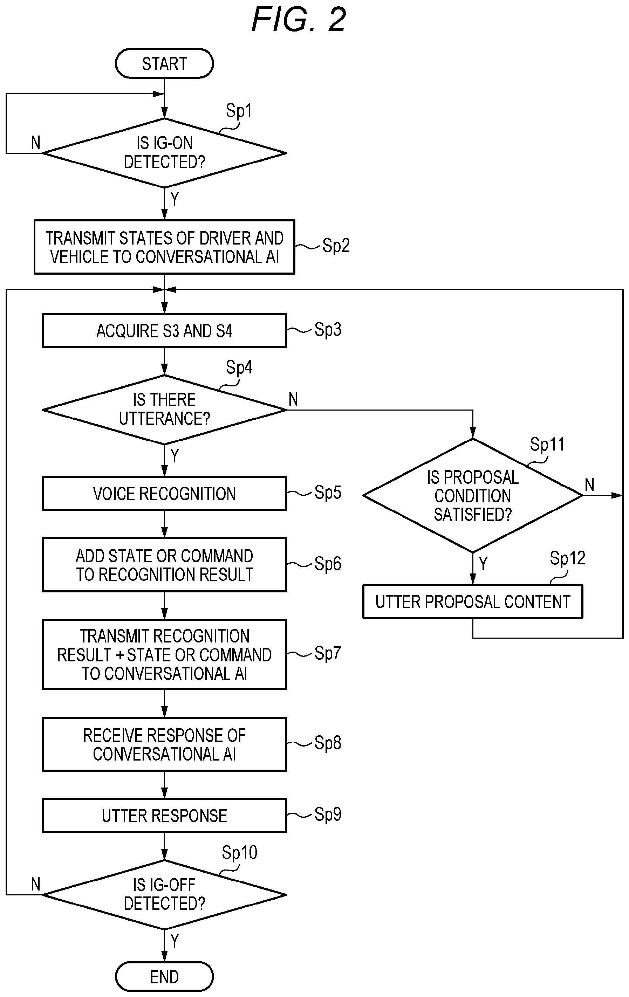

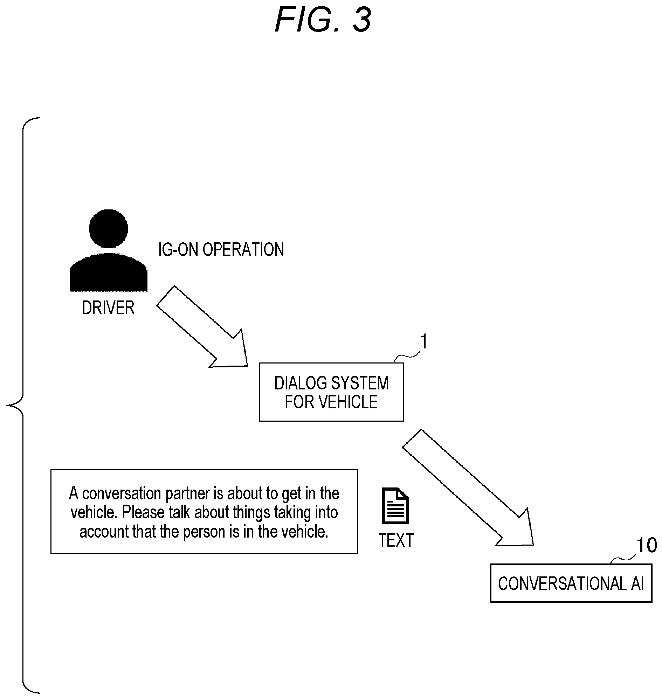

Next, operation of the dialog system for vehicle 1 having the above configuration will be described with reference to a flowchart shown in FIG. 2. When detecting an ignition-on (IG-ON) (Sp1), the microcomputer 4 transmits text data indicating states of the driver and the vehicle to the conversational AI 10 in (Sp2). As an example of the text data indicating the states of the driver and the vehicle includes, as shown in FIG. 3, a message indicating that "A conversation partner is about to get in the vehicle. Please talk about things taking into account that the person is in the vehicle." may be used. Accordingly, the conversational AI 10 understands a state where the conversation partner (driver) is in the vehicle, and thereafter, contents of the conversation are based on a premise that the conversation partner is in the vehicle.

In Sp2, the microcomputer 4 may also transmit text data of information on the controllable vehicle device 11. As an example of the text data, a message indicating that "Adjustment of temperature and an air volume of an air conditioner, adjustment of luminance of a head-up display (HUD), and control of audio can be proposed in accordance with a conversation with the conversation partner." may be used. Accordingly, the conversational AI 10 can understand a state where it is possible to adjust the temperature and the air volume of the air conditioner, adjust luminance of the head-up display, and control audio in the vehicle where the driver is present.

In Sp2, the microcomputer 4 may further determine the number of persons in the vehicle based on the detection result from the seat sensor and transmit the determined number of persons to the conversational AI 10. As an example of the text data, a massage indicating that "Only the driver is in the vehicle" or "Two persons including the driver are in the vehicle." may be used. Accordingly, the conversational AI 10 can understand whether the driver is alone or another person is in the vehicle.

Thereafter, the microcomputer 4 acquires the sensor information S3, the human information S4, and the warning information S5 described above (Sp3). Thereafter, when the driver utters (Y in Sp4), the microcomputer 4 performs voice recognition processing of converting the voice uttered by the driver into text data (Sp5). Thereafter, the microcomputer 4 adds the states of the driver and the vehicle when the driver utters or a command (text data) in accordance with the states to the text data converted by the voice recognition processing (Sp6), and transmits the text data to the conversational AI 10 as the input information S1 (Sp7).

In Sp6, the microcomputer 4 may add text data indicating the sensor information S3, the human information S4, and the warning information S5 acquired in Sp3 as the text data indicating the states of the driver and the vehicle when the driver utters. The microcomputer 4 may also add text data indicating whether the vehicle is driving, stopped, or waiting for a traffic light as the text data indicating the state of the vehicle.

Further, the microcomputer 4 determines whether a driving load of the driver when the driver utters is high. Whether the driving load is high can be determined based on, for example, the speed (sensor information S3) from the speed sensor and the human information S4. The determination may further be made based on an attribute of the driver registered in advance (whether the driver is accustomed to driving or not, and whether the driver is familiar with devices of the vehicle or not). When determining that the driving load is high when the driver utters, the microcomputer 4 may add text data for shortening the response information S2 as a command in accordance with the state. As an example of the text data at this time, a massage indicating that "Please summarize the answer." may be used.

Thereafter, the microcomputer 4 receives the response information S2 corresponding to the input information S1 transmitted in Sp7 (Sp8), converts the received response information S2 into a voice, and outputs the voice from the speaker 5 (Sp9). Next, when detecting an ignition-off (IG-OFF) (Y in Sp10), the microcomputer 4 ends the process. On the other hand, when no ignition off is detected (N in Sp10), the microcomputer 4 returns to Sp3 again.

After executing Sp3, if the driver is not uttering (N in Sp4), the microcomputer 4 returns to Sp3 after converting a proposal content into voice data and outputting the voice data from the speaker 5 (Sp12) if a predetermined proposal condition is satisfied based on the information S3 to S5 acquired by Sp3 (Sp11). As the proposal condition of Sp11, for example, a proposal condition for reducing the speed is satisfied if the speed (sensor information S3) measured by the speed sensor is high, and a proposal for reducing the speed is output from the speaker 5.

The dialog system for vehicle 1 described above transmits the states of the driver and the vehicle when the driver is uttering to the conversational AI 10. Accordingly, the conversational AI 10 can appropriately respond to the voice of the driver after understanding the states of the driver and the vehicle when the driver is uttering.

The dialog system for vehicle 1 described above transmits a command to shorten the response information to the conversational AI 10 in a case where the driving load when the driver utters is high. Accordingly, in a case where the driving load when the driver utters is high, a response of the conversational AI 10 can be shortened.

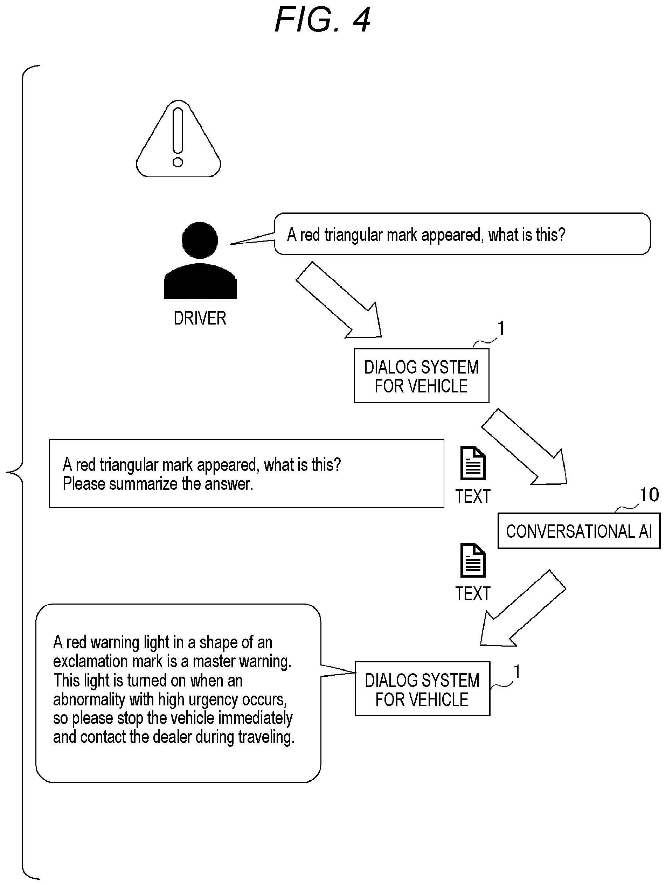

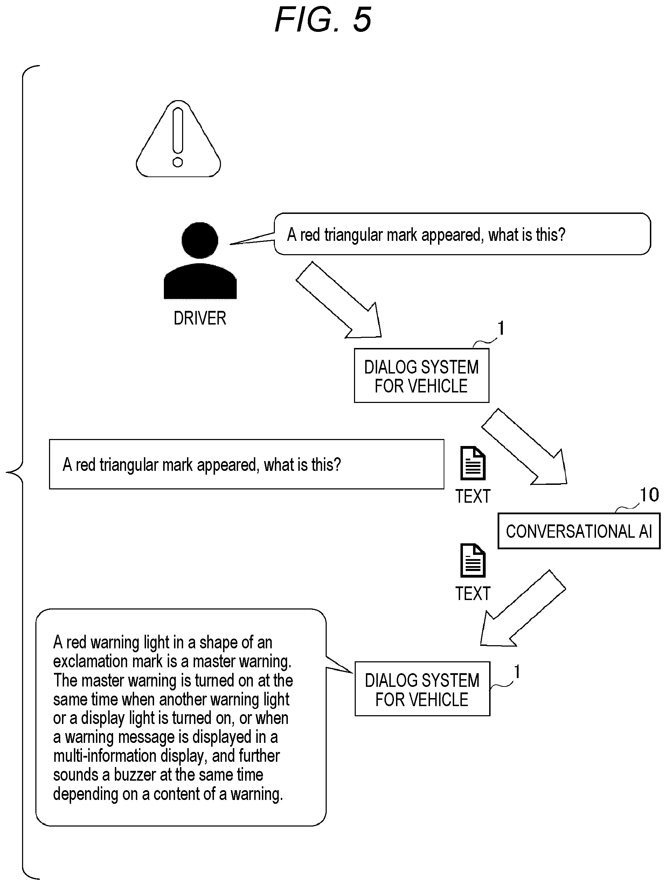

For example, as conversation examples shown in FIGS. 4 and 5, a case where a warning lamp is turned on during driving and the driver utters that "A red triangular exclamation mark appeared, what is this?" will be described. When determining that the driving load is high, as shown in FIG. 4, the microcomputer 4 of the dialog system for vehicle 1 adds text data that "Please summarize the answer" to the text data of the voice uttered by the driver and transmits the text data to the conversational AI 10.

On one hand, when determining that the driving load is low, as shown in FIG. 5, the microcomputer 4 does not add the text data that "Please summarize the answer". Accordingly, when the driving load is low, as shown in FIG. 5, a long detailed expression as written in a vehicle manual may be returned as "A red warning light in a shape of an exclamation mark is a master warning. The master warning is turned on at the same time as when another warning light or display light is turned on, or when a warning message is displayed in a multi-information display, and further sounds a buzzer at the same time depending on a content of a warning".

On the other hand, when the driving load is high, a simple and short expression summarizing the vehicle manual may be returned as "A red warning light in a shape of an exclamation mark is a master warning. This light is turned on when an abnormality with high urgency occurs, so please stop the vehicle immediately and contact the dealer during traveling".

The microcomputer 4 of the dialog system for vehicle 1 described above transmits the sensor information S3 from the sensors mounted on the vehicle when the driver utters to the conversational AI 10 as the state of the vehicle. Accordingly, the conversational AI 10 can more appropriately respond to the voice of the driver after understanding the state of the vehicle.

The microcomputer 4 of the dialog system for vehicle 1 receives the detection result of the abnormality detection unit when the driver utters as the state of the vehicle. Accordingly, the conversational AI 10 can appropriately respond to the voice of the driver after understanding that the warning lamp is turned on. Accordingly, for example, it is possible to appropriately answer an utterance that "A lamp is turned on, what is this?" from the driver.

The microcomputer 4 of the dialog system for vehicle 1 described above transmits the text data of the information on the controllable vehicle device 11 in Sp2. For this reason, the conversational AI 10 can propose control of the vehicle device 11 in accordance with an utterance of the driver. Although not shown in the flowchart of FIG. 2, the microcomputer 4 controls the vehicle device 11 based on the text data converted by the voice recognition unit 41 and the response information S2 from the conversational AI 10.

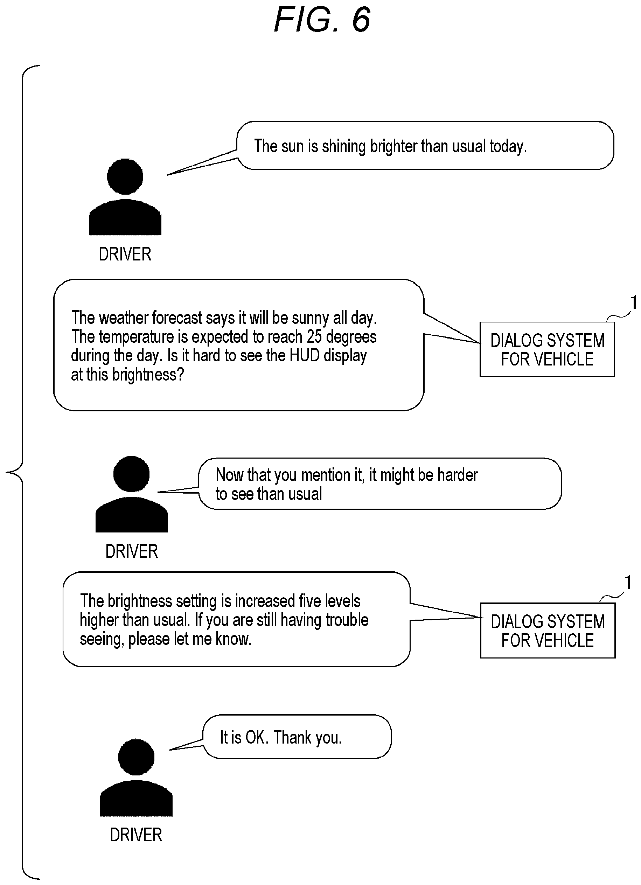

For example, description will be given to a case where the driver utters that "The sun is shining brighter than usual today." as in a conversation example shown in FIG. 6. The dialog system for vehicle 1 transmits the position information on the vehicle and the illuminance information (text data) to the conversational AI 10 in Sp7, in addition to text data that "The sun is shining brighter than usual today.". Further, the dialog system for vehicle 1 transmits information indicating that the HUD can be controlled in Sp2. Accordingly, the conversational AI 10 can acquire information on weather and temperature from the position information and predict that the HUD is difficult to see, and can transmit the response information S2 that "The weather forecast says it will be sunny all day. The temperature is expected to reach 25 degrees during the day. Is it hard to see the HUD display at this brightness?".

The microcomputer 4 of the dialog system for vehicle 1 analyzes a subsequent conversation between the dialog system for vehicle 1 and the driver and controls the HUD, which is the vehicle device 11, to increase brightness by five levels.

A configuration may be adopted that the dialog system for vehicle 1 adds the states of the driver and the vehicle to a first utterance from the driver in a series of conversations, and does not add the states of the driver and the vehicle to subsequent utterances. That is, in the conversation example shown in FIG. 6, the dialog system for vehicle 1 adds the state of the driver and the vehicle only to text data of the first utterance of the driver that "The sun is shining brighter than usual today.", and does not add situation information on the driver and the vehicle to subsequent text data that "Now that you mention it, it might be harder to see than usual" and that "It is OK, thank you".

The microcomputer 4 of the dialog system for vehicle 1 described above transmits the number of persons in the vehicle to the conversational AI 10. Accordingly, the conversational AI 10 appropriately responds to the voice of the driver after understanding whether the driver is alone or another person is in the vehicle.

The present invention is not limited to the embodiment described above and can be appropriately modified, improved and the like. Materials, shapes, sizes, numbers, arrangement positions, and the like of components in the embodiment described above are freely selected and are not limited as long as the present invention can be implemented.

According to the above-described embodiment, the information on the controllable vehicle device 11 and the number of persons in the vehicle, which do not change from moment to moment, are transmitted immediately after the ignition is turned on. Alternatively, the present invention is not limited thereto. The information on the controllable vehicle device 11 and the number of persons in the vehicle may also be added to the text data of the voice uttered by the driver and be transmitted.

According to the above-described embodiment, the state of the driver is determined from an image obtained by imaging the face of the driver. Alternatively, the present invention is not limited thereto. The state of the driver may be determined based on, for example, a measurement value from a heart rate monitor worn by the driver.

According to the above-described embodiment, the microcomputer 4 returns to Sp4 after reading the response information S2 to an end in Sp9 and receives an utterance of the driver. Alternatively, the present invention is not limited thereto. The microcomputer 4 may have a so-called barge-in function. In the barge-in function, when detecting an utterance while the response information S2 is being read out in Sp9, the microcomputer 4 may stop the reading, return to Sp5, and execute voice recognition on the utterance of the driver. The barge-in function may be set on and off by a user such as the driver.

The microcomputer 4 may read out the response information S2 in response to the utterance of the interrupting driver in the middle of reading out the response information S2, and then read out the response information S2 that was being read out again.

When the voice recognition of the interrupting utterance in Sp5 results in command information to stop an utterance such as "stop talking" or "long talking", the microcomputer 4 may stop proceeding to Sp7 for transmitting the voice recognition result or the like to the conversational AI 10, return to Sp4 again, and receive a next utterance of the driver. That is, the microcomputer 4 does not read out the response information S2 that was being read out again in a case of the command information to stop the utterance.

In a case other than the command information to stop the utterance, the microcomputer 4 proceeds to Sp7 for transmitting the voice result or the like to the conversational AI 10.

According to the above-described embodiment, the dialog system for vehicle 1 communicates with the conversational AI 10 via the Internet communication network, but the present invention is not limited thereto. The conversational AI 10 may be assembled on a control board in the vehicle. In this case, a conversation can be made even in a poor communication environment.

Here, features of the embodiment of the dialog system for vehicle according to the present invention described above are briefly summarized and listed in following [1] to [6].
[1] A dialog system for vehicle (1) using a conversational AI (10), which outputs response information (S2) including text data when receiving input information (S1) including text data, includes:
   a voice input unit (2) configured to input a voice uttered by a driver;
   a voice recognition unit (41) configured to convert the voice input by the voice input unit (2) into text data;
   an input control unit (42) configured to input, as the input information (S1), the text data converted by the voice recognition unit (41) and text data indicating a state of the driver or a vehicle driven by the driver when the driver utters or a command in accordance with the state to the conversational AI (10);
   a voice synthesis unit (43) configured to convert the response information (S2) from the conversational AI (10) into a voice; and
   a voice output unit (5) configured to output the voice converted by the voice synthesis unit (43).
   According to the configuration in [1], the conversational AI (10) can appropriately respond to the voice of the driver after understanding the states of the driver and the vehicle when the driver is uttering.
[2] In the dialog system for vehicle (1) described in [1],
   the dialog system for vehicle (1) further includes a first determination unit (42) configured to determine whether a driving load of the driver is high, and
   when the first determination unit (42) determines that the driving load is high when the driver utters, the input control unit (42) inputs the text data for shortening the response information (S2) to the conversational AI (10) as the text data indicating the command.
   According to the configuration in [2], the response of the conversational AI (10) can be shortened when the driving load when the driver utters is high.
[3] In the dialog system for vehicle (1) described in [1],
   sensor information from a sensor mounted on the vehicle is input to the input control unit (42), and
   the input control unit (42) inputs the sensor information when the driver utters to the conversational AI (10) as the state of the vehicle.
   According to the configuration in [3], the conversational AI (10) can more appropriately respond to the voice of the driver after understanding the state of the vehicle.
[4] In the dialog system for vehicle (1) described in [1],
   a detection result from an abnormality detection unit that detects an abnormality of the vehicle and turns on a warning lamp is input to the input control unit (42), and
   the input control unit (42) inputs the detection result of the abnormality detection unit when the driver utters to the conversational AI (10) as the state of the vehicle.
   According to the configuration in [4], the conversational AI (10) can appropriately respond to the voice of the driver after understanding that the warning lamp is turned on.
[5] In the dialog system for vehicle (1) described in [1],
   the dialog system for vehicle (1) further includes a device control unit configured to control a vehicle device (11),
   the input control unit (42) inputs text data indicating information on the vehicle device (11) controllable by the device control unit (42) to the conversational AI (10), and
   the device control unit (42) controls the vehicle device (11) based on the text data converted by the voice recognition unit (41) and the response information (S2) from the conversational AI (10).
   According to the configuration in [5], the conversational AI (10) can propose control of the vehicle device (11) according to the utterance of the driver.
[6] In the dialog system for vehicle (1) described in [1],
   the dialog system for vehicle (1) further includes a second determination unit (42) configured to determine the number of persons in the vehicle, and
   the input control unit (42) inputs the number of persons determined by the second determination unit (42) to the conversational AI (10).

According to the configuration in [6], the conversational AI (10) appropriately responds to the voice of the driver after understanding whether the driver is alone or another person is in the vehicle.

Although the present invention is described in detail with reference to the specific embodiment, it is apparent to those skilled in the art that various changes and corrections can be made without departing from the spirit and scope of the present invention.

The present application is based on a Japanese patent application (JP2023-181851A) filed on October 23, 2023, the contents of which are incorporated herein by reference.

### INDUSTRIAL APPLICABILITY

According to the present invention, it is possible to provide a dialog system for vehicle that appropriately responds to a voice of a driver. The present invention having this effect is useful for a dialog system for vehicle.

### REFERENCE SIGNS LIST

1 dialog system for vehicle
2 microphone (voice input unit)
5 voice output unit
10 conversational AI
41 voice recognition unit
42 voice conversation unit (input control unit, first determination unit, device control unit, second determination unit)
43 voice synthesis unit
S1 input information
S2 response information

## Claims

1. A dialog system for vehicle using a conversational AI that outputs response information including text data when receiving input information including text data, the dialog system for vehicle comprising:
a voice input unit configured to input a voice uttered by a driver;
a voice recognition unit configured to convert the voice input by the voice input unit into text data;
an input control unit configured to input, as the input information, the text data converted by the voice recognition unit and text data indicating a state of the driver or a vehicle driven by the driver when the driver utters or a command in accordance with the state to the conversational AI;
a voice synthesis unit configured to convert the response information from the conversational AI into a voice; and
a voice output unit configured to output the voice converted by the voice synthesis unit.

2. The dialog system for vehicle according to claim 1, further comprising:
a first determination unit configured to determine whether a driving load of the driver is high, wherein
in a case where the first determination unit determines that the driving load is high when the driver utters, the input control unit inputs the text data for shortening the response information to the conversational AI as the text data indicating the command.

3. The dialog system for vehicle according to claim 1, wherein
sensor information from a sensor mounted on the vehicle is input to the input control unit, and
the input control unit inputs the sensor information when the driver utters to the conversational AI as the state of the vehicle.

4. The dialog system for vehicle according to claim 1, wherein
a detection result from an abnormality detection unit that detects an abnormality of the vehicle and turns on a warning lamp is input to the input control unit, and
the input control unit inputs the detection result of the abnormality detection unit when the driver utters to the conversational AI as the state of the vehicle.

5. The dialog system for vehicle according to claim 1, further comprising:
a device control unit configured to control a vehicle device, wherein
the input control unit inputs text data indicating information on the vehicle device controllable by the device control unit to the conversational AI, and
the device control unit controls the vehicle device based on the text data converted by the voice recognition unit and the response information from the conversational AI.

6. The dialog system for vehicle according to claim 1, further comprising:
a second determination unit configured to determine the number of persons in the vehicle, wherein
the input control unit inputs the number of persons determined by the second determination unit to the conversational AI.
